# EUROPÄISCHE PATENTSCHRIFT

(11) **EP 3 033 231 B1**
(45) Veröffentlichungstag und Bekanntmachung des Hinweises auf die Patenterteilung: **18.07.2018**
(21) Anmeldenummer: 14755343.2
(22) Anmeldetag: 08.08.2014
(51) Int. Cl.: B32B 37/06, B32B 37/20, B29C 65/02, B32B 15/04

(54) **VERFAHREN ZUR HERSTELLUNG EINES VERBUNDWERKSTOFFS**
METHOD FOR PRODUCING A COMPOSITE MATERIAL
PROCÉDÉ POUR PRODUIRE UN MATÉRIAU COMPOSITE

(30) Priorität: 16.08.2013 DE 102013013495
(43) Veröffentlichungstag der Anmeldung: 22.06.2016
(73) Patentinhaber: ThyssenKrupp Steel Europe AG, 47166 Duisburg (DE)
(72) Erfinder: PATBERG, Lothar, 47445 Moers (DE); KOCH, Klaus-Peter, 58332 Schwelm (DE)
(74) Vertreter: thyssenkrupp Intellectual Property GmbH
(86) Internationale Anmeldenummer: PCT/EP2014/067105
(87) Internationale Veröffentlichungsnummer: WO 2015/022275

(56) Entgegenhaltungen:
- JP-A- 2005 199 615
- US-A1- 2010 151 231

## Beschreibung

Die Erfindung betrifft ein Verfahren zur Herstellung eines Sandwichverbundwerkstoffs bestehend aus mindestens zwei äußeren metallischen Deckschichten und mindestens einer zwischen den Deckschichten angeordneten Kunststoffschicht, bei welchem mindestens zwei einseitig mit Kunststoff beschichtete, metallische Halbzeuge bereitgestellt werden, zum Aufbau einer Verbindung zwischen den Kunststoffschichten der Halbzeuge mindestens eine der Kunststoff beschichteten Seiten der metallischen Halbzeuge vor dem Verbinden aktiviert wird und die Halbzeuge miteinander über ihre mit Kunststoff beschichteten Seiten zu einem Sandwichverbundwerkstoff verbunden werden, wobei die Aktivierung der Kunststoffschicht der Halbzeuge unmittelbar von der mit Kunststoff beschichteten Seite des Halbzeugs her erfolgt.

Aus dem Stand der Technik ist bereits bekannt mit mindestens einer Kunststoffschicht einseitig beschichtete Halbzeuge aus Metall miteinander zu einem Sandwichverbundwerkstoff zu verbinden. So ist beispielsweise aus der deutschen Offenlegungsschrift 21 18 230 bekannt, entsprechende, einseitig mit einer Kunststoffschicht beschichtete Halbzeuge in einem diskontinuierlichen Verfahren zu verbinden, in dem die metallische Seite des Halbzeugs erwärmt wird, so dass die Kunststoffschicht erweicht und anschließend beide Halbzeuge mit ihren Kunststoffseiten gegeneinander gepresst werden, so dass die Kunststoffschichten sich miteinander verbinden. Bei kontinuierlichen Verfahren ist es beispielsweise bekannt zwei mit mindestens einer Kunststoffschicht beschichtete, bandförmige Halbzeuge über die Kunststoffschichten zu einem Sandwichverbundwerkstoff zu verbinden, in dem über eine Doppelbandpresse Wärme in die metallischen Deckschichten der Halbzeuge eingebracht wird, so dass die Kunststoffschicht erweicht und somit eine Verbindung mit der gegenüberliegenden Kunststoffschicht eingeht. Problematisch bei dem Wärmeeintrag zur Aktivierung der Kunststoffschicht ist, dass aufgrund des Wärmetransports von der metallischen Deckschicht des Halbzeugs zur gegenüberliegenden, die Verbindung aufbauenden Seite des Halbzeugs höhere Temperaturen anliegen müssen, um die anvisierte Temperatur im Grenzbereich der beiden Kunststoffschichten zu erreichen. Dabei besteht die Gefahr, dass die Kunststoffschicht im Bereich des Metalls, weil dieses eine höhere Temperatur als die Kunststoffoberfläche des Halbzeugs hat, aufschmilzt und delaminiert.

Als weiteren Stand der Technik sind die Offenlegungsschriften US 2010/0151231 A1 und JP-A 2005 199615 zu nennen.

Hiervon ausgehend hat sich die vorliegenden Erfindung die Aufgabe gestellt, ein Verfahren zur Verfügung zu stellen, welches eine Verbesserung der Prozesssicherheit bei der Herstellung von Sandwichverbundwerkstoffen aus einseitig mit mindestens einer Kunststoffschicht beschichteten Halbzeugen gewährleistet. Ferner liegt der Erfindung die Aufgabe zu Grunde, eine vorteilhafte Vorrichtung zur wirtschaftlichen Herstellung entsprechender Sandwichverbundwerkstoffe vorzuschlagen.

Gemäß der Lehre der vorliegenden Erfindung wird die oben aufgezeigte Aufgabe für ein Verfahren durch die Merkmale des Anspruchs 1 gelöst.

Anders als im bisher bekannten Verfahren, bei welchem die Aktivierung durch Erwärmung der Kunststoffschicht über die Metallschicht durchgeführt wurde, wird die Kunststoffschicht unmittelbar aktiviert, d.h. die Aktivierung erfolgt von der Kunststoffoberflächenseite aus, so dass die Aktivierungsprozesse negative Auswirkungen auf die Verbindung zwischen der Kunststoffschicht und der Metallschicht effektiv verhindert werden. Insbesondere kann die Gefahr einer Delamination der zu verbindenden Halbzeuge während des Verbindens oder zu einem späteren Zeitpunkt deutlich reduziert werden. Erfindungsgemäß werden zwei bandförmige mit mindestens einer Kunststoffschicht beschichtete Halbzeuge von einem Coil abgewickelt und nach der Aktivierung mindestens einer der Kunststoffschichten der Halbzeuge kontinuierlich miteinander über die Kunststoffschichten verbunden. Hierdurch kann ein besonders wirtschaftliches Herstellverfahren für die Erzeugung eines Sandwichverbundwerkstoffs bereitgestellt werden, da bei dem kontinuierlichen Verbinden der Halbzeuge miteinander große Mengen des Sandwichverbundwerkstoffs mit gleichbleibenden Eigenschaften herstellbar sind.

Gemäß einer ersten Ausgestaltung des erfindungsgemäßen Verfahrens erfolgt die Aktivierung durch Wärme, durch Einwirken eines Aktivierungsmediums, durch Strahlung und/oder durch Einwirkung eines Plasmas unmittelbar auf die Kunststoffoberfläche mindestens eines Halbezugs. Die Aktivierung durch Wärme ist eine besonders einfache Methode, eine Kunststoffschicht, beispielsweise eine thermoplastische Kunststoffschicht zu aktivieren. Aktivieren im Sinne der vorliegenden Anmeldung bedeutet, dass die Kunststoffschicht bzw. ihre Oberfläche in einen Zustand versetzen wird, in welchem diese sich mit einer weiteren Kunststoffschicht verbinden kann. Darüber hinaus gibt es die Möglichkeit durch Einwirken eines Aktivierungsmediums, beispielsweise eines Gases, z.B. Ozon oder eines Lösungsmittels, die Oberfläche mindestens eines einseitig beschichteten Halbzeugs zu aktivieren. Daneben kann auch durch Strahlung, beispielsweise UV-Strahlung oder durch die Einwirkung eines Plasmas die Oberfläche eines Kunststoffs so verändert werden, dass diese beim Aufpressen einer weiteren Kunststoffschicht eine Verbindung mit dieser Kunststoffschicht eingeht. Allen Verfahren gemein ist, dass die Aktivierung der Kunststoffschicht des mindestens einen Halbzeugs unmittelbar von der Seite der Kunststoffoberfläche des Halbzeugs her erfolgt.

Gemäß einer weiteren Ausgestaltung wird die Oberfläche der Kunststoffschicht mindestens eines Halbzeugs auf eine Temperatur unterhalb einer kritischen Temperatur erwärmt und ein in Richtung der metallischen Deckschicht negativer Temperaturgradient in der Kunststoffschicht erzeugt. Als kritische Temperatur kann beispielsweise abhängig vom jeweiligen Kunststoff, der Schmelzpunkt aber auch ein spezifischer Erweichungspunkt, beispielsweise der Glasübergangstemperaturpunkt, verwendet werden, um einen möglichst optimalen Verbindungsprozess zwischen den zu verbindenden Kunststoffoberflächen der beiden Halbzeuge zu erreichen. Die kritische Temperatur ist dabei abhängig von der Wahl des jeweiligen Kunststoffs der Oberfläche. Aufgrund des eingebrachten negativen Temperaturgradienten sinkt die Temperatur des Kunststoffs zur metallischen Deckschicht hin ab. Hierdurch wird erreicht, dass die Metall-Kunststoffverbindung vor negativen Einflüssen aufgrund der Kunststoffoberfläche geschützt wird und ein maximaler Aktivierungsgrad der Kunststoffschicht erzielt wird.

Erfolgt der Wärmeeintrag gemäß einer weiteren Ausgestaltung des Verfahrens radiativ über Laser, LEDs, Mirkowellenstrahlung oder Infrarotstrahlungsquellen, kann aufgrund der exponentiell abfallenden Absorption der Energie der eingebrachten Strahlung auf einfache Weise ein negativer Temperaturgradient in der Kunststoffschicht berührungslos erzeugt werden. Selbstverständlich gilt dies auch für einen konvektiv eingebrachten Wärmeeintrag, beispielsweise durch Beaufschlagung der Kunststoffschichten mit heißer Luft.

Bevorzugt werden Polyamid, Polyethylen oder ein Blend aus Polyamid und Polyethylen aufweisende Kunststoffschichten der Halbzeuge miteinander verbunden. Polyethylene und Polyamide zeichnen sich durch eine besonders gute Verarbeitbarkeit bei der Beschichtung von metallischen Oberflächen aus und können, beispielsweise durch Erwärmung, auf einfache Weise aktiviert werden. Ein Blend aus Polyamid und Polyethylen führt zur Kombination der Eigenschaften beider Kunststoffe miteinander in einer Schicht.

Eine sehr gute Anpassung des Sandwichverbundwerkstoffs an die Festigkeitsforderungen in den jeweiligen Anwendungsbereichen kann gemäß einer weiteren Ausgestaltung des Verfahrens dadurch bereitgestellt werden, dass Halbzeuge verbunden werden, welche metallische Deckschichten aus Stahl mit einer Dicke von 0,1 mm bis 0,5 mm aufweisen. Nicht nur über die Auswahl der Stahlgüte, sondern auch über die Dicke von 0,1 mm bis 0,5 mm kann die Festigkeit des Sandwichverbundwerkstoffs stark beeinflusst werden. So können beispielsweise durch die Verwendung hochfester Stahlgüten für die metallischen Deckschichten besonders leichte und dennoch hochfeste Sandwichverbundwerkstoffe hergestellt werden. Stehen nicht so hohe Festigkeitsanforderungen im Vordergrund, können aber auch kostengünstigere Stahlgüten verwendet werden. Grundsätzlich können aber auch andere Werkstoffe als metallische Deckschichten eingesetzt werden, beispielsweise Aluminiumlegierungen oder Magnesiumlegierungen.

Werden Halbzeuge gemäß einer weiteren Ausgestaltung des Verfahrens verbunden, welche vor dem Verbinden eine Kunststoffschicht mit einer Dicke von 0,1 bis 0,8 mm aufweisen, kann einerseits eine ausreichende Gewichtseinsparung durch die Kunststoffschicht zur Verfügung gestellt werden und andererseits ein leichtes Verbinden der einseitig mit einer Kunststoffschicht beschichten Halbzeuge garantiert werden. Mit steigender Dicke der Kunststoffschicht steigt die Gewichtseinsparung im Vergleich zu einem Vollmaterial.

Werden Halbzeuge miteinander verbunden, welche gemäß einer weiteren Ausgestaltung des Verfahrens mindestens eine Haftvermittlerschicht zwischen Metallschicht und Kunststoffschicht aufweisen, kann die Gefahr einer Delamination während des Herstellverfahrens oder zu einem späteren Zeitpunkt des Sandwichverbundwerkstoffs weiter reduziert werden. Die Haftvermittlerschicht zwischen Metallschicht und Kunststoffschicht sorgt für eine erhöhte Haftung zwischen beiden Schichten.

Gemäß einer weiteren Ausgestaltung erfolgt das Verbinden der Halbzeuge mit einer Walzenanordnung, wobei mindestens ein Walzenpaar derart angeordnet ist, dass dieses einen Walzspalt bereitstellt, in welchem die bandförmigen Halbzeuge miteinander verbunden werden, kann eine Art Kaschierprozess bereitgestellt werden, welcher sehr gute Produktionskapazitäten aufweist. Grundsätzlich ist die Produktionsgeschwindigkeit eines Walzenpaares zur Herstellung des Sandwichverbundwerkstoffs größer als die einer bisher verwendeten Doppelbandpresse.

Schließlich kann alternativ gemäß einer weiteren Ausgestaltung des Verfahrens eine Doppelbandpresse zum Verbinden der Halbzeuge verwendet werden.

Beschrieben ist ferner eine Vorrichtung zur Herstellung eines Sandwichverbundwerkstoffs aufweisend mindestens zwei metallischen Deckschichten und mindestens eine zwischen den metallischen Deckschichten angeordneten Kunststoffschicht, wobei die Vorrichtung mindestens zwei Abwickelhaspeln für ein bandförmiges Halbzeug aufweist, wobei die Halbzeuge jeweils ein einseitig mit mindestens einer Kunststoffschicht beschichtetes metallisches Band aufweisen und Mittel zum kontinuierlichen, flächenhaften Verbinden der beiden Halbzeuge über deren mit Kunststoff beschichteten Seiten vorgesehen sind, dass Mittel vorgesehen sind, mit welchen die Kunststoffschicht mindestens eines der Halbzeuge unmittelbar von der Seite der Kunststoffschicht des jeweiligen Halbzeuges her durch Wärme, durch Einwirken eines Aktivierungsmediums, durch Strahlung und/oder durch Einwirkung eines Plasmas aktiviert werden kann.

Wie bereits zuvor erläutert, besteht durch das unmittelbare Aktivieren der Kunststoffoberfläche der mindestens einen Kunststoffschicht des Halbzeugs die Möglichkeit, die Aktivierung der Oberfläche sehr gut zu steuern und dann unmittelbar dem Verbindungsprozess zuzuleiten. Insbesondere wird die Gefahr eines Delaminierens des Sandwichverbundwerkstoffs deutlich verringert.

Gemäß einer weiteren Ausgestaltung der Vorrichtung ist als Mittel zum Verbinden der Halbzeuge eine Doppelbandpresse oder mindestens ein Walzenpaar vorgesehen. Durch beide Vorrichtungen können bandförmige Halbzeuge auf besonders effektiver und wirtschaftlicher Weise miteinander verbunden werden. Das Walzenpaar bietet dabei allerdings die höhere Produktivität.

Sind die Mittel zur Aktivierung der Kunststoffschicht mindestens eines der bandförmigen Halbzeugs in Bandlaufrichtung unmittelbar vor den Mitteln zum Verbinden der Halbzeuge angeordnet, ist es auf einfache Weise möglich unmittelbar vor dem Verbindungsprozess die Aktivierung der Kunststoffoberfläche mindestens eines der einseitig beschichten Halbzeuge durchzuführen. Wird die Aktivierung beispielsweise durch einen Wärmeeintrag durchgeführt, ist es auf einfache Weise möglich, die Temperatur bis zum Verbinden der beiden Halbzeuge über deren Kunststoff beschichteten Seiten aufrechtzuerhalten.

Schließlich kann die Vorrichtung dadurch vorteilhaft weitergebildet werden, dass eine Aufwickelhaspel für den Sandwichverbundwerkstoff oder eine Vorrichtung zum Abtafeln von Zuschnitten des Sandwichverbundwerkstoffs vorgesehen ist. Der Sandwichverbundwerkstoff kann so in beiden Varianten, sowohl für die bandförmige Verarbeitung als auch für die Weiterverarbeitung von Zuschnitten vorbereitet werden.

Die Erfindung soll nun im Weiteren anhand von Ausführungsbeispielen in Verbindung mit der Zeichnung näher erläutert werden. Die Zeichnung zeigt in
- Fig. 1: in einer schematischen Ansicht ein Ausführungsbeispiel der erfindungsgemäßen Vorrichtung zur Herstellung eines Sandwichverbundwerkstoffs,
- Fig. 2a: eine vergrößerte Darstellung der Kunststoffschicht eines Halbzeugs unmittelbar nach der Aktivierung,
- Fig. 2b: in einem Diagramm den Temperaturverlauf der Kunststoffschicht des in Fig. 2a dargestellten Halbzeugs nach der Aktivierung,
- Fig. 3: in einer schematischen Darstellung ein weiteres Ausführungsbeispiel einer Vorrichtung zur Herstellung eines Sandwichverbundwerkstoffs und in
- Fig. 4: in einer schematischen Darstellung einer alternativen Ausgestaltung des letzten Verfahrensschritts der Vorrichtung aus Fig. 3.

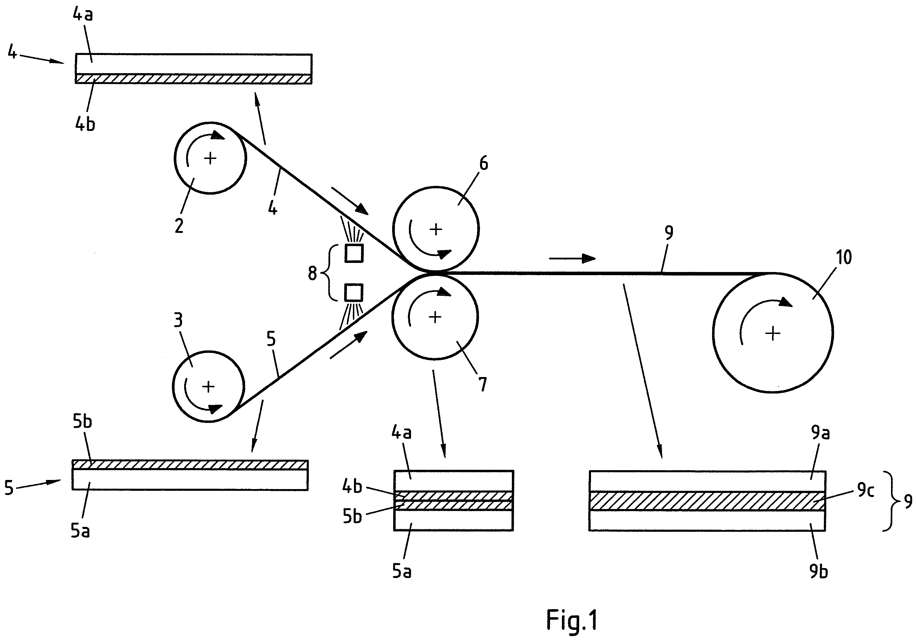

In Fig. 1 ist einer schematischen Darstellung ein erstes Ausführungsbeispiel einer Vorrichtung 1 zur Herstellung eines Sandwichverbundwerkstoffs dargestellt, welche jeweils eine Abwickelhaspel 2, 3 für je ein Halbzeug 4, 5 aufweist. Die Halbzeuge 4 und 5 bestehen aus einer Metallschicht 4a, 5a sowie auf den Metallschichten 4a, 5a angeordneten Kunststoffschichten 4b, 5b. Die Kunststoffschichten 4b, 5b bestehen beispielsweise aus Polyethylen oder Polyamid, vorzugsweise aber auch aus einem Blend aus Polyethylen und Polyamid. Sie weisen eine Dicke von 0,1 mm bis 0,8 mm auf. Die beiden bandförmigen Halbzeuge 4, 5 werden von den jeweiligen Abwickelhaspeln abgewickelt und einem Walzenpaar 6, 7 in der Weise zugeführt, dass sich die beiden Kunststoffschichten der Halbzeuge 4b, 5b, gegenüberliegen. Unmittelbar bevor die Halbzeuge in den Walzspalt der Walzen 6, 7 eingeführt werden, werden die Kunststoffschichten 4b, 5b beider Halbzeuge 4, 5 über Mittel 8 von der Kunststoffoberflächenseite her aktiviert.

Im Unterschied zu den bisherigen Verfahren, bei welchen die Aktivierung durch beispielsweise die Erwärmung der Metallschicht also von der Seite der Metallschicht erfolgte, kann durch die Aktivierung der Kunststoffschicht von der Kunststoffseite bzw. der Kunststoffoberfläche der Kunststoff beschichteten Halbzeuge her erreicht werden, dass lediglich die zur Aktivierung der die Verbindung aufbauenden Kunststoffoberfläche benötigte Energie eingebracht wird. Eine stärkere Erwärmung der Verbindung zwischen Metall und Kunststoff kann dadurch beispielsweise effektiv vermieden werden. Darüber hinaus können durch die unmittelbare Aktivierung der Kunststoffoberflächenschicht auch andere Aktivierungsmedien eingesetzt werden, beispielsweise Lösungsmittel oder Ozon.

Besonders einfache Mittel zur Aktivierung der Kunststoffoberflächenschicht werden aber durch einen Wärmeeintrag verursachende Mittel 8 bereitgestellt. Diese können radiaktiv oder konvektiv die Kunststoffoberflächenschicht mindestens eines Halbzeugs, bevorzugt aber beider Halbzeuge erwärmen. Als radiaktive Mittel können beispielsweise LEDs, Laser, Mikrowellenstrahler oder Infrarotstrahlungsquellen verwendet werden. Auch ein einfaches Heißluftgebläse kann für die konvektive Erwärmung der Kunststoffoberflächenschicht verwendet werden und sehr präzise in Bezug auf die kritische Temperatur eingestellt werden. Die kritische Temperatur kann maximal beispielsweise die Schmelztemperatur des Kunststoffs der Kunststoffschicht sein, da der Kunststoff beim Aufschmelzen möglicherweise seine Oberflächengeometrie verliert. Es kann aber auch ausreichen, bei der Aktivierung der Kunststoffoberflächenschicht eine Erwärmung auf eine Temperatur im Bereich der Glasübergangstemperatur vorzusehen, um später ein Verbinden der beiden Kunststoffschichten zwischen dem Walzenpaar 6, 7 zu erreichen.

Bevorzugt sind beispielsweise auch Mittel zur Messung der Temperatur der Kunststoffoberflächenschicht in den Mitteln 8 zur Aktivierung der Kunststoffoberflächenschicht integriert, so dass der Prozess sehr gut gesteuert werden kann. In dem zwischen den Walzen 6 und 7 bereitgestellten Walzspalt werden die beiden Halbzeuge 4, 5 gegeneinander gepresst, so dass die beiden Kunststoffschichten 4b, 5b in Kontakt treten. Fig. 1 zeigt hierzu eine schematische Schnittansicht des Sandwichverbundwerkstoffs in dem Moment, in welchem sich die beiden Kunststoffschichten 4b, 5b berühren.

Aufgrund der Aktivierung der Kunststoffschichten bilden diese im weiteren zeitlichen Verlauf eine einheitliche Kunststoffschicht, wie dies in einer nächsten schematischen Schnittansicht der Fig. 1 des Verbundwerkstoffs 9 nach dem Kaschieren zeigt. Die beiden metallischen Schichten 9a und 9b schließen nun eine einzige Kunststoffschicht 9c ein. Die Metallschichten 9a und 9b bestehen vorzugsweise aus einem Stahl mit einer Dicke von 0,1 mm bis 0,5 mm. Über die Stahlgüten kann die Festigkeit des herzustellenden Sandwichverbundwerkstoffs gemeinsam mit einer Auswahl der Dicke in dem genannten Bereich eingestellt werden. Beispielsweise kann durch die Auswahl hochfester Stahlgüten für die metallischen Deckschichten 9a und 9b des Sandwichverbundwerkstoffs eine deutliche Steigerung der Festigkeit oder eine deutliche Abnahme der Dicke bei gleichzeitiger Beibehaltung der Festigkeit erreicht werden.

Die Kunststoffschicht 9c des Sandwichverbundwerkstoffs weist vorzugsweise eine Dicke von 0,3 mm bis 1,5 mm auf. Der so hergestellte Sandwichverbundwerkstoff 9 kann dann über eine Aufwickelhaspel 10 beispielsweise zu einem Coil aufgewickelt werden.

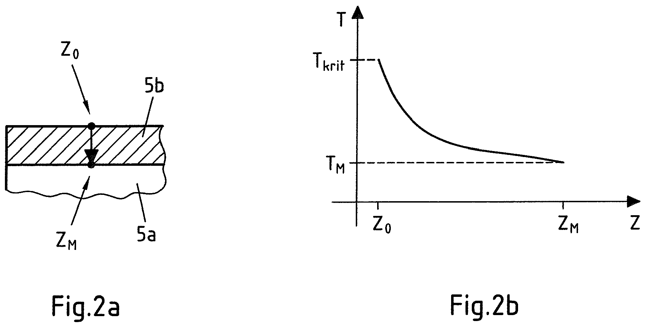

Fig. 2a zeigt in einem Ausschnitt die Kunststoffoberflächenschicht 5b mit der darunterliegenden metallischen Deckschicht 5a. Darüber hinaus sind in Fig. 2a die Kunststoffoberfläche mit der Koordinate Z₀ sowie die Grenzschicht zur metallischen Deckschicht mit der Koordinate Z_{M} dargestellt. Die Kunststoffschicht 5b wurde in dem dargestellten Ausführungsbeispiel durch einen Wärmeeintrag aktiviert. Aufgrund des erfindungsgemäßen Aktivierungsverfahrens durch Erwärmung der Kunststoffschicht unmittelbar von der mit Kunststoff beschichteten Seite des Halbzeugs aus kann erreicht werden, dass ein negativer Temperaturgradient in der Kunststoffschicht in Richtung der metallischen Deckschicht 5a erzeugt wird.

Dies zeigt schematisch die Fig. 2b in einem Diagramm. Ein entsprechend typischer, annähernd exponentieller Verlauf, wird durch Mittel 8 zur Aktivierung der Kunststoffschicht der Halbzeuge erreicht, welche radiativ oder konvektiv Wärme übertragen. Der im Diagramm der Fig. 2b dargestellte Temperaturgradient zeigt, dass an der Kunststoffoberfläche bei der Koordinate Z₀ eine kritische Temperatur eingestellt werden kann und die Temperatur in Richtung metallische Deckschicht Z_{M} abfällt. Hierdurch wird sichergestellt, dass bei Einstellen einer spezifischen, optimalen Prozesstemperatur zum Verbinden der Kunststoffschichten, die Verbindung zur metallischen Deckschicht nicht beeinflusst wird. Zumindest kann hierdurch eine hohe Sicherheit erreicht werden, dass eine kritische Temperatur im Bereich der Verbindung zwischen metallischer Deckschicht 4a, 5a und der Kunststoffschicht 4b und 5b nicht überschritten wird.

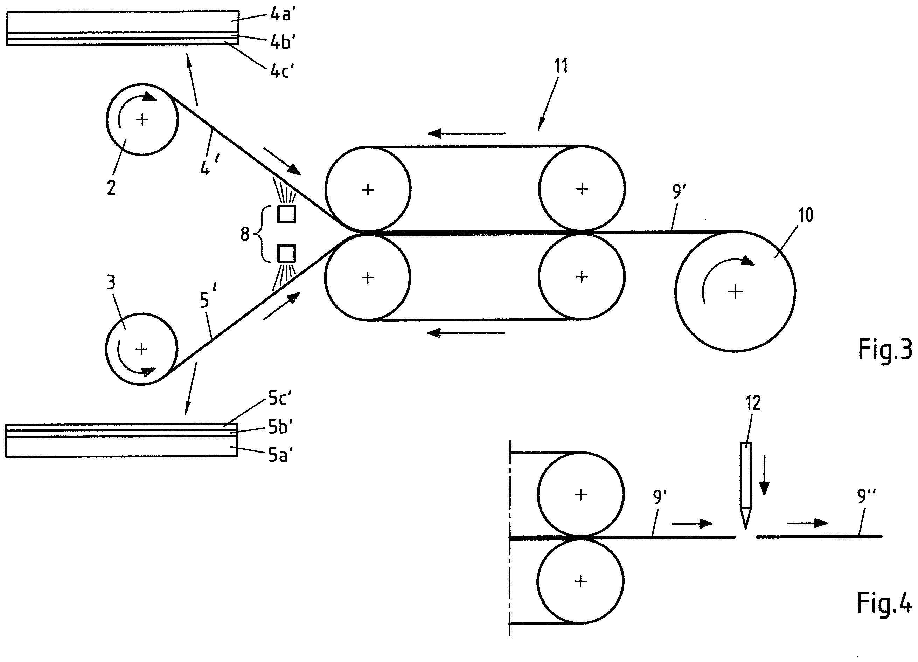

Fig. 3 zeigt in einem weiteren Ausführungsbeispiel der Vorrichtung zur Herstellung eines Sandwichbauteils eine alternative Variante zur Vorrichtung 1. Die Vorrichtung 1' weist eine Doppelbandpresse 11 auf, welche die zugeführten Halbzeuge 4' und 5' nach der direkten Aktivierung der Kunststoffoberfläche der Halbzeuge 4', 5' miteinander zu einem Sandwichverbundwerkstoff verbindet. Anschließend wird der bandförmige Sandwichverbundwerkstoff mit einer Aufwickelhaspel 10 aufgewickelt. Die Halbzeuge 4', 5' unterscheiden sich allerdings in der Fig. 3 von den in Fig. 2 dargestellten Halbzeugen 4 und 5. Neben den Metallschichen 4a' und 5a' sind zusätzlich mindestens eine Haftvermittlerschicht 5b' bzw. 4b' vorgesehen, welche die Verbindung zwischen den Metallschichten 4a' und 5a' zur Kunststoffschicht 4c', 5c' deutlich verbessert.

Eine alternative Ausgestaltung des letzten Verarbeitungsschritts der in Fig. 3 dargestellten Vorrichtung, nämlich das Aufwickeln zu einem Coil unter Verwendung einer Aufwickelhaspel 10, ist in Fig. 4 schematisch dargestellt. Der hergestellte Sandwichverbundwerkstoff 9' wird über eine Vorrichtung zur Abtafelung 12 in Zuschnitte 9" zugeschnitten. Hierdurch können bereits vereinzelte Bleche bestehend aus dem Sandwichverbundwerkstoff bereitgestellt werden.

Zwar ist nach dem Verbinden der Halbzeuge 4, 5 bzw. 4', 5' als weiterer Verarbeitungsschritt entweder ein Aufwickeln oder ein Abtafeln in den Figuren dargestellt. Es ist aber selbstverständlich denkbar, dass im weiteren Verlauf weitere Verarbeitungsschritte hinzukommen, beispielsweise eine zusätzliche Beschichtung der äußeren, metallischen Deckschichten des Sandwichverbundwerkstoffs. Auch andere Verarbeitungsschritte sind denkbar.

## Patentansprüche

1. Verfahren zur Herstellung eines Sandwichverbundwerkstoffs (9, 9', 9") bestehend aus mindestens zwei äußeren metallischen Deckschichten (9a, 9b) und mindestens einer zwischen den Deckschichten angeordneten Kunststoffschicht (9c), bei welchem mindestens zwei einseitig mit Kunststoff (4b, 4c', 5b, 5c') beschichtete, metallische Halbzeuge (4, 4', 5, 5') bereitgestellt werden, zum Aufbau einer Verbindung zwischen den Kunststoffschichten (4b, 4c', 5b, 5c') der Halbzeuge (4, 4', 5, 5') mindestens eine der Kunststoff (4b, 4c', 5b, 5c') beschichteten Seiten der metallischen Halbzeuge (4, 4', 5, 5') vor dem Verbinden aktiviert wird und die Halbzeuge (4, 4', 5, 5') miteinander über ihre mit Kunststoff (4b, 4c', 5b, 5c') beschichteten Seiten zu einem Sandwichverbundwerkstoff (9, 9', 9") verbunden werden, wobei die Aktivierung der Kunststoffschicht (4b, 4c', 5b, 5c') der Halbzeuge (4, 4', 5, 5') unmittelbar von der mit Kunststoff (4b, 4c', 5b, 5c') beschichteten Seite des Halbzeugs (4, 4', 5, 5') her erfolgt,
**dadurch gekennzeichnet, dass**
zwei bandförmige mit mindestens einer Kunststoffschicht (4b, 4c', 5b, 5c') beschichtete Halbzeuge (4, 4', 5, 5') von je einem Coil (2, 3) abgewickelt werden und beide Halbzeuge (4, 4', 5, 5') nach der Aktivierung mindestens einer der Kunststoffschichten (4b, 4c', 5b, 5c') der Halbzeuge (4, 4', 5, 5') kontinuierlich über die Kunststoffschichten (4b, 4c', 5b, 5c') miteinander verbunden werden.

2. Verfahren nach Anspruch 1,
**dadurch gekennzeichnet, dass**
die Aktivierung durch Wärme, durch Einwirken eines Aktivierungsmediums, durch Strahlung und/oder durch Einwirkung eines Plasmas unmittelbar auf die Kunststoffoberfläche (4b, 4c', 5b, 5c') mindestens eines Halbzeugs (4, 4', 5, 5') erfolgt.

3. Verfahren nach Anspruch 1 oder 2,
**dadurch gekennzeichnet, dass**
die Oberfläche der Kunststoffschicht (4b, 4c', 5b, 5c') mindestens eines Halbzeugs (4, 4', 5, 5') auf eine Temperatur unterhalb einer kritischen Temperatur erwärmt wird und ein in Richtung der metallischen Deckschicht (4a, 4a', 5a, 5a') negativer Temperaturgradient in der Kunststoffschicht (4b, 4c', 5b, 5c') erzeugt wird.

4. Verfahren nach einem der Ansprüche 1 bis 3,
**dadurch gekennzeichnet, dass**
der Wärmeeintrag radiativ über Laser, LEDs, Mirkowellenstrahlung oder Infrarotstrahlungsquellen erfolgt.

5. Verfahren nach einem der Ansprüche 1 bis 4,
**dadurch gekennzeichnet, dass**
Halbzeuge (4, 4', 5, 5') mit mindestens einer Polyamid, Polyethylen oder ein Blend aus Polyamid und Polyethylen aufweisenden Kunststoffschicht (4b, 4c', 5b, 5c') verbunden werden.

6. Verfahren nach einem der Ansprüche 1 bis 5,
**dadurch gekennzeichnet, dass**
Halbzeuge (4, 4', 5, 5') verbunden werden, welche metallische Deckschichten (4a, 4a', 5a, 5a') aus Stahl mit einer Dicke von 0,1 mm bis 0,5 mm aufweisen.

7. Verfahren nach einem der Ansprüche 1 bis 6,
**dadurch gekennzeichnet, dass**
Halbzeuge (4, 4', 5, 5') verbunden werden, welche vor dem Verbinden eine Kunststoffschicht (4b, 4c', 5b, 5c') mit einer Dicke von 0,1 bis 0,8 mm aufweisen.

8. Verfahren nach einem der Ansprüche 1 bis 7,
**dadurch gekennzeichnet, dass**
Halbzeuge (4', 5') verbunden werden, welche mindestens eine Haftvermittlerschicht (4b', 5b') zwischen Metallschicht (4a', 5a') und Kunststoffschicht (4c', 5c') aufweisen.

9. Verfahren nach einem der Ansprüche 1 bis 8,
**dadurch gekennzeichnet, dass**
das Verbinden der Halbzeuge (4, 5) mit einer Walzenanordnung (6, 7) erfolgt, wobei mindestens ein Walzenpaar (6, 7) derart angeordnet ist, dass dieses einen Walzspalt bereitstellt, in welchem die bandförmigen Halbzeuge (4, 5) miteinander verbunden werden.

10. Verfahren nach einem der Ansprüche 1 bis 8,
**dadurch gekennzeichnet, dass**
eine Doppelbandpresse (11) zum Verbinden der Halbzeuge (4', 5') verwendet wird.

## Claims

1. Method for producing a sandwich composite material (9, 9', 9") consisting of at least two outer metallic covering layers (9a, 9b) and at least one plastic layer (9c) which is arranged between the covering layers, in which method at least two metallic semifinished products (4, 4', 5, 5'), which are coated with plastic (4b, 4c', 5b, 5c') on one side, are provided, and, in order to establish a connection between the plastic layers (4b, 4c', 5b, 5c') of the semifinished products (4, 4', 5, 5'), at least one of the plastic (4b, 4c', 5b, 5c')-coated sides of the metallic semifinished products (4, 4', 5, 5') is activated before the connection operation, and the semifinished products (4, 4', 5, 5') are connected to one another by means of the plastic (4b, 4c', 5b, 5c')-coated sides of said semifinished products in order to form a sandwich composite material (9, 9', 9"), wherein the activation of the plastic layer (4b, 4c', 5b, 5c') of the semifinished products (4, 4', 5, 5') takes place directly from the plastic (4b, 4c', 5b, 5c')-coated side of the semifinished product (4, 4', 5, 5'),
**characterized in that**
two strip-like semifinished products (4, 4', 5, 5') which are coated with at least one plastic layer (4b, 4c', 5b, 5c') are unwound from in each case one coil (2, 3), and the two semifinished products (4, 4', 5, 5') are connected to one another by means of the plastic layers (4b, 4c', 5b, 5c') in a continuous manner after the activation of at least one of the plastic layers (4b, 4c', 5b, 5c') of the semifinished products (4, 4', 5, 5').

2. Method according to Claim 1,
**characterized in that**
the activation takes place by heat, by the action of an activation medium, by radiation and/or by the action of a plasma directly onto the plastic surface (4b, 4c', 5b, 5c') of at least one semifinished product (4, 4', 5, 5').

3. Method according to Claim 1 or 2,
**characterized in that**
the surface of the plastic layer (4b, 4c', 5b, 5c') of at least one semifinished product (4, 4', 5, 5') is heated to a temperature below a critical temperature, and a temperature gradient which is negative in the direction of the metallic covering layer (4a, 4a', 5a, 5a') is generated in the plastic layer (4b, 4c', 5b, 5c').

4. Method according to one of Claims 1 to 3,
**characterized in that**
the input of heat takes place in a radiative manner by means of laser, LEDs, microwave radiation or infrared radiation sources.

5. Method according to one of Claims 1 to 4,
**characterized in that**
semifinished products (4, 4', 5, 5') are connected to at least one plastic layer (4b, 4c', 5b, 5c') which comprises polyamide, polyethylene or a blend of polyamide and polyethylene.

6. Method according to one of Claims 1 to 5,
**characterized in that**
semifinished products (4, 4', 5, 5') which have metallic covering layers (4a, 4a', 5a, 5a') which are composed of steel and have a thickness of from 0.1 mm to 0.5 mm are connected.

7. Method according to one of Claims 1 to 6,
**characterized in that**
semifinished products (4, 4', 5, 5') which have a plastic layer (4b, 4c', 5b, 5c') with a thickness of from 0.1 to 0.8 mm before the connection operation are connected.

8. Method according to one of Claims 1 to 7,
**characterized in that**
semifinished products (4', 5') which have at least one adhesion-promoting layer (4b', 5b') between the metal layer (4a', 5a') and the plastic layer (4c', 5c') are connected.

9. Method according to one of Claims 1 to 8,
**characterized in that**
the connection of the semifinished products (4, 5) takes place with a roller arrangement (6, 7), wherein at least one pair of rollers (6, 7) is arranged in such a way that said pair of rollers provides a rolling gap in which the strip-like semifinished products (4, 5) are connected to one another.

10. Method according to one of Claims 1 to 8,
**characterized in that**
a twin-belt press (11) is used for connecting the semifinished products (4', 5').

## Revendications

1. Procédé de fabrication d'un matériau composite en sandwich (9, 9', 9") composé d'au moins deux couches de recouvrement (9a, 9b) extérieures métalliques et d'au moins une couche en matière plastique (9c) disposée entre les couches de recouvrement, procédé selon lequel sont fournis au moins deux demi-produits (4, 4', 5, 5') métalliques revêtus sur un côté de matière plastique (4b, 4c', 5b, 5c'), au moins l'un des côtés des demi-produits (4, 4', 5, 5') métalliques qui est revêtu de matière plastique (4b, 4c', 5b, 5c') est activé avant l'assemblage en vue d'établir une liaison entre les couches en matière plastique (4b, 4c', 5b, 5c') des demi-produits (4, 4', 5, 5') et les demi-produits (4, 4', 5, 5') sont assemblés ensemble par le biais de leurs côtés revêtus de matière plastique (4b, 4c', 5b, 5c') pour former un matériau composite en sandwich (9, 9', 9"), l'activation de la couche en matière plastique (4b, 4c', 5b, 5c') des demi-produits (4, 4', 5, 5') s'effectuant directement depuis le côté du demi-produit (4, 4', 5, 5') qui est revêtu de matière plastique (4b, 4c', 5b, 5c'),
**caractérisé en ce que**
deux demi-produits (4, 4', 5, 5') en forme de bande revêtus d'au moins une couche en matière plastique (4b, 4c', 5b, 5c') sont respectivement débobinés d'un feuillard (2, 3) et les deux demi-produits (4, 4', 5, 5'), après l'activation d'au moins l'une des couches en matière plastique (4b, 4c', 5b, 5c') des demi-produits (4, 4', 5, 5'), sont assemblés ensemble en continu par le biais des couches en matière plastique (4b, 4c', 5b, 5c').

2. Procédé selon la revendication 1, **caractérisé en ce que** l'activation est effectuée par chauffage, par l'action d'un médium d'activation, par rayonnement et/ou par l'action d'un plasma directement sur la surface en en matière plastique (4b, 4c', 5b, 5c') d'au moins un demi-produit (4, 4', 5, 5').

3. Procédé selon la revendication 1 ou 2, **caractérisé en ce que** la surface de la couche en matière plastique (4b, 4c', 5b, 5c') d'au moins un demi-produit (4, 4', 5, 5') est chauffée à une température inférieure à une température critique et un gradient de température négatif dans la direction de la couche de recouvrement (4a, 4a', 5a, 5a') métallique est généré dans la couche en matière plastique (4b, 4c', 5b, 5c').

4. Procédé selon l'une des revendications 1 à 3, **caractérisé en ce que** l'apport de chaleur est effectué par rayonnement par le biais d'un laser, de LED, d'un rayonnement à hyperfréquence ou de sources de rayonnement à infrarouge.

5. Procédé selon l'une des revendications 1 à 4, **caractérisé en ce que** les demi-produits (4, 4', 5, 5') sont assemblés avec une couche en matière plastique (4b, 4c', 5b, 5c') possédant au moins un polyamide, un polyéthylène ou un mélange de polyamide et de polyéthylène.

6. Procédé selon l'une des revendications 1 à 5, **caractérisé en ce que** sont assemblés des demi-produits (4, 4', 5, 5') qui possèdent des couches de recouvrement (4a, 4a', 5a, 5a') métalliques en acier ayant une épaisseur de 0,1 mm à 0,5 mm.

7. Procédé selon l'une des revendications 1 à 6, **caractérisé en ce que** sont assemblés des demi-produits (4, 4', 5, 5') qui, avant l'assemblage, possèdent une couche en matière plastique (4b, 4c', 5b, 5c') ayant une épaisseur de 0,1 à 0,8 mm.

8. Procédé selon l'une des revendications 1 à 7, **caractérisé en ce que** sont assemblés des demi-produits (4', 5') qui possèdent au moins une couche d'agent adhésif (4b', 5b') entre la couche métallique (4a', 5a') et la couche en matière plastique (4c', 5c').

9. Procédé selon l'une des revendications 1 à 8, **caractérisé en ce que** l'assemblage des demi-produits (4, 5) est effectué avec un arrangement de cylindres (6, 7), au moins une paire de cylindres (6, 7) étant disposée de telle sorte qu'elle produit un écartement entre cylindres dans lequel les demi-produits (4, 5) en forme de bande sont assemblés l'un à l'autre.

10. Procédé selon l'une des revendications 1 à 8, **caractérisé en ce qu'**une presse à double bande (11) est utilisée pour l'assemblage des demi-produits (4', 5').
